(19)

Europäisches Patentamt

European Patent Office

Office européen des brevets

(11) **EP 2 484 684 A1**

(12) **EUROPEAN PATENT APPLICATION**

(43) Date of publication:
08.08.2012 Bulletin 2012/32

(21) Application number: **12161861.5**

(22) Date of filing: **11.12.2007**

(51) Int Cl.:
*C07F 9/38* (2006.01)          *C02F 5/12* (2006.01)
*C02F 5/14* (2006.01)

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **11.12.2006 EP 06025515**

(62) Document number(s) of the earlier application(s) in accordance with Art. 76 EPC:
**07857377.1 / 2 125 843**

(27) Previously filed application:
**11.12.2007 EP 07857377**

(71) Applicant: **Dequest AG**
**6300 Zug (CH)**

(72) Inventors:
• **Notté, Patrick**
**1300 Wavre (BE)**
• **Van Bree, Jan H. J**
**3040 Ottenburg / BE (BE)**
• **Devaux, Albert**
**1435 Mont-Saint-Guibert (BE)**

(74) Representative: **Rippel, Hans Christoph**
**Isenbruck Bösl Hörschler LLP**
**Eastsite One**
**Seckenheimer Landstrasse 4**
**68163 Mannheim (DE)**

Remarks:
This application was filed on 02-04-2012 as a divisional application to the application mentioned under INID code 62.

(54) **Reactive phosphonates**

(57) Novel reactive phosphonate compounds are disclosed corresponding to the structural formula set forth. The reactive moiety is selected from the group of Cl, I, Br, $HSO_4$, $NO_3$, mixtures of Cl and I, $CH_3SO_3$ and p-toluene sulfonic acid whereas the hydrocarbon linking group between the nitrogen and the reactive moiety is most preferably a linear hydrocarbon chain having fro 3 to 12 carbon atoms. The novel phosphonates herein can be used in multiple established applications, such as detergency, water treatment, oil recovery, pharmaceutical intermediate and pharmaceutical products. The novel compounds are particularly useful for the "tailor" synthesis of optimized structural arrangements capable of meeting beneficial performance requirements.

**EP 2 484 684 A1**

**Description**

This invention relates to a class of novel phosphonate compounds. In particular, novel reactive phosphonate compounds having the formula Y-X-N(W)(ZPO$_3$M$_2$) wherein the individual structural moieties have a specifically defined meaning as set forth hereinafter. The "reactive" moiety, Y, is preferably represented by Cl, I, Br, HSO$_4$, NO$_3$, CH$_3$SO$_3$ and p-toluene sulfonic acid, and mixtures thereof, whereas the hydrocarbon link, X, between the nitrogen and the reactive moiety is preferably a hydrocarbon chain having from 3 to 30 carbon atoms or [A-0]$_x$-A wherein A is a C$_2$-C$_6$ hydrocarbon chain and x is an integer of from 1-100. The novel phosphonates herein are particularly beneficial for "tailor" synthesizing novel phosphonate compounds for example for use in a multitude of applications such as dispersion, water-treatment, scale inhibition, sequestration, corrosion inhibition, pharmaceuticals and pharmaceutical intermediates, textiles, detergents, secondary oil recovery, paper industry, sugar and beer industry, fertilizers and micronutrients and metal treatment.

Phosphonate compounds broadly are well-known and have been used in multiple applications. The prior art is thus crowded and diverse. EP 0 401 833 discloses aminophosphonate-containing polymers and their use as dispersants for concentrated aqueous particulate slurries and as corrosion and scale inhibitors. The phosphonates contain ethylenically unsaturated comonomers and can be prepared by reacting the polymeric reactant with a phosphonate halohydrin or with a phosphonate epoxide.

US 5,879,445 describes the use of compounds containing at least one phosphonic aminoalkylene group and at least one polyalkoxylated chain for fluidizing an aqueous suspension of mineral particles or hydraulic binder paste. WO 94/08913 divulges comparable technologies.

US 4,330,487 describes a process of preparing N,N'-disubstituted methylene phosphonic acids by reacting α, ω-alkylene diamines with formaldehyde and phosphorous acid in aqueous medium in accordance with the Mannich reaction at a pH of generally less than 1. Zaitsev V.N. et al., Russian Chemical Bulletin, (1999), 48(12), 2315-2320, divulges modified silicas containing aminophosphonic acids covalently bonded onto the silica surface.

US 4,260,738 describes starch ether derivatives containing aminophosphonic acid groups, namely either one or two anionic methylene phosphonic acid groups, bound to a cationic nitrogen. The starch derivative is said to exhibit cationic or anionic properties which (properties) may be increased by introducing selected groups together with the aminophosphonic acid reagent. The starch derivatives can be used beneficially as pigment retention aids in paper making processes. US 4,297,299 pertains to novel N-(alkyl)-N-(2-haloethyl)-aminomethylene phosphonic acids exhibiting desirable pigment retention properties upon use in paper making processes.

US 4,707,306 discloses alpha-aminomethylene phosphonate betaines and polymers prepared therewith. J. Mortier et al. disclose the synthesis of N-alkyl/aryl-alpha/beta-aminoalkylphosphonic acids from organodichloroboranes and alpha/beta-azidoalkylphosphonates via polyborophosphonates.

The prior art does provide a limited number of phosphonate compounds which are frequently marginally adapted and optimized for use within the context of an ever broadening range of known and novel applications.

It is a major object of this invention to provide novel phosphonate compounds eminently suitable and optimized for a large variety of applications. Another object of this invention aims at generating a range of novel reactive phosphonates suitable for "tailor" synthesizing phosphonate compounds, with high selectivity, which compounds can be used beneficially in established and additional, to current usages, applications.

The foregoing and other objects can now be met by a specifically defined class of reactive phosphonate compounds as defined in detail below.

The term "percent" or "%" as used throughout this application stands, unless defined differently, for "percent by weight" or "% by weight". The terms "phosphonic acid" and "phosphonate" are also used interchangeably depending, of course, upon medium prevailing alkalinity/acidity conditions. The term "reactive" phosphonate is merely meant to emphasize the ease with which the claimed phosphonate compounds can be used for synthesizing other phosphonates.

Phosphonic acid compounds have now been discovered containing, in essence, a reactive moiety Y attached, by means of a hydrocarbon link, X, to an amino phosphonic acid moiety. In more detail, this invention concerns:

a reactive phosphonate compound having the formula:

$$Y\text{-}X\text{-}N\,(W)\,(ZPO_3M_2)$$

wherein Y is selected from: substituents the conjugated acid of which have a pKa equal to or smaller than 4.0;

X is selected from C$_3$-C$_{50}$ linear, branched, cyclic or aromatic hydrocarbon chain, optionally substituted by a C$_1$-C$_{12}$ linear, branched, cyclic, or aromatic group, (which chain and/or which group can be) optionally substituted by OH, COOH, F, OR' and SR' moieties, wherein R' is a C$_1$-C$_{12}$ linear, branched, cyclic or aromatic hydrocarbon chain; and [A-O]$_x$-A wherein A is a C$_2$-C$_9$ linear, branched, cyclic or aromatic hydrocarbon chain and x is an integer from 1 to 200;

provided that when X is substituted by OH such moiety can be attached to any carbon atom other than the second carbon atom starting from Y;

Z is a $C_1$-$C_6$ alkylene chain;

M is selected from H and $C_1$-$C_{20}$ linear, branched, cyclic or aromatic hydrocarbon chains;

W is selected from H, $ZPO_3M_2$ and $[V-N(K)]_nK$, wherein V is selected from: a $C_2$-$C_{50}$ linear, branched, cyclic or aromatic hydrocarbon chain, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear, branched, cyclic or aromatic hydrocarbon chain; and from $[A-0]_x$-A wherein A is a $C_2$-$C_9$ linear, branched, cyclic or aromatic hydrocarbon chain and x is an integer from 1 to 200; and

K is $ZPO_3M_2$ or H and n is an integer from 0 to 200;

wherein the following compound is excluded:

chloropropyl imino mono (methylene phosphonic acid.

In preferred executions, the pKa is equal to or smaller than 1.0 and X is a hydrocarbon having from 3 to 30 carbon atoms or $[A-O]_x$-A wherein A is a $C_2$-$C_6$ hydrocarbon chain and x is of from 1-100 and W is $ZPO_3M_2$.
The pKa value is a well known variable which can be expressed as follows:

$$pKa = -\log_{10}Ka.$$

wherein Ka represents the thermodynamic equilibrium acidity constant. The pKa values of all acid substances are known from the literature or can, if this were needed, be determined conveniently. Values are listed, e. g., in the Handbook of Chemistry and Physics.
Y can preferably be selected from Cl, Br, I, $HSO_4$, $NO_3$, $CH_3SO_3$ and p-toluene sulfonate and mixtures thereof.
In the definition of X, R', A and V the $C_x$-$C_y$ linear or branched hydrocarbon chain is preferably a linear or branched alkane-diyl with a respective chain length. Cyclic hydrocarbon chain is preferably $C_3$-$C_{10}$-cycloalkane-diyl. Aromatic hydrocarbon chain is preferably $C_6$-$C_{12}$-arene-diyl. When the foregoing hydrocarbon chains are substituted, it is preferably with linear or branched alkyl of a respective chain length, $C_3$-$C_{10}$-cycloalkyl, or $C_6$-$C_{12}$-aryl. All these groups can be further substituted with the groups listed with the respective symbols.
More and particularly preferred chain lengths for alkane moieties are listed with the specific symbols. A cyclic moiety is more preferred a cyclohexane moiety, in case of cyclohexanediyl in particular a cyclohexane-1,4-diyl moiety. An aromatic moiety is preferably phenylene or phenyl as the case may be, for phenylene 1,4-phenylene is particularly preferred.
The individual radicals in the phosphonate compound can, in a preferred manner, be beneficially selected from species as follows:

| Moiety | Preferred | Most Preferred |
|---|---|---|
| X | $C_3$-$C_{30}$ | $C_3$-$C_{12}$ |
| | $[A-O]_x$-A | $[A-O]_x$-A |
| V | $C_2$-$C_{30}$ | $C_2$-$C_{12}$ |
| | $[A-0]_x$-A | $[A-O]_x$-A |

wherein for both, X and V independently;

| | | |
|---|---|---|
| A | $C_2$-$C_6$, | $C_2$-$C_4$; and |
| x | 1-100 | 1-100 |

(continued)

| | | |
|---|---|---|
| Z | $C_1$-$C_3$ | $C_1$ |
| M | H, $C_1$-$C_6$ | H, $C_1$-$C_4$ |
| n | 1-100 | 1-25 |

A phosphonate compound having an OH substituent attached to the second, starting from Y, carbon atom of X, in the event Y stands for halogen, is not a phosphonate in the meaning of the invention. Preferably, a reactive phosphonate, in the event Y stands for halogen, shall not carry an OH substituent attached to any one of the second, third or fourth, starting from Y, carbon atom of X.

In a preferred embodiment of the invention X is a $C_3$-$C_{30}$-hydrocarbon chain or [A-O]$_x$-A with the proviso that in the case of a $C_3$-hydrocarbon chain (W) is $ZPO_3M_2$.
In a further preferred embodiment of the invention X is $C_3$-$C_{30}$ or [A-0]$_x$-A and (W) is $ZPO_3M_2$.
In yet a further preferred embodiment of the invention X is [A-O]$_x$-A.

The preparation of the novel phosphonate compounds herein usually can require a sequence of individually well known measures routinely available in the domain of chemical synthesis. In one approach, the phosphonate compound can be prepared by phosphonating a chloroalkyl amine hydrochloride in a conventional manner by reaction, in aqueous medium, with phosphorous acid and formaldehyde, in acid medium, at a temperature generally in the range of from 50 °C to 140 °C, preferably of from 90 °C to 120 °C. The reaction partners are used in molar proportions consonant with the moiety ratios of the phosphonate product to be synthesized. In another approach, a reactive phosphonate can be synthesized by reacting, in aqueous medium having a pH of 6 or smaller, the corresponding alcohol e.g. HO-X-N $(ZPO_3M_2)_2$ with a suitable precursor for Y, e.g. hydrobromic, hydrochloric and/or hydroiodic acid, in obviously acid medium at a temperature in the range of from 100 °C to 200 °C, preferably 110 °C to 150 °C. A reactive phosphonate compound can also be prepared, as illustrated below, by a sequence of reactions involving, for example, the conversion of acrylonitrile:

$$CH_2=CH-CN \text{ (H)} + HCl/H_2O \rightarrow C1-CH_2-CH_2-C\equiv N \qquad (I)$$

$$(I) + H_2/catalyst - Cl-CH_2-CH_2-CH_2-NH_2 \qquad (C)$$

$$(C) + CH_2O/H_3PO_3/HCl \rightarrow Cl-(CH_2)3-N(CH_2PO_3H_2)_2 \qquad (D).$$

Alternatively, the phosphonate compounds herein can be synthesized differently as follows:

$$(H) + H^+/H_2O \rightarrow HO-CH_2-CH_2-CN \qquad (E)$$

$$(E) + H_2/catalyst \rightarrow HO-(CH_2)_3-NH_2 \qquad (F)$$

$$(F) + HCl/H_2O \rightarrow (C) \rightarrow (D)$$

or

$$(F) + CH_2O/H_3PO_3/HCl \rightarrow HO-(CH_2)_3N(CH_2PO_3H_2)_2 \qquad (G)$$

$$(G) + HCl/H_2O \rightarrow \qquad (D).$$

The acrylonitrile starting material can be substituted by other starting materials capable of yielding a reactive phosphonate. As an example such a phosphonate can be routinely synthesized starting from dichloro ethane and and alkali cyanide.

In yet another approach, this invention contemplates a process for the manufacture of the phosphonate compound of Claim 1, wherein Y is I or Br, by ion-exchange of the chloro- phosphonate compound with an aqueous solution containing an inorganic, preferably an alkali metal, iodide or bromide salt at a temperature of from 10 °C to 100 °C wherein the ion exchange reaction medium has an acid pH equal to 6 or smaller, preferably in the range of from 1 to 4.

The pH measurements in the manufacturing arrangements are determined in the reaction medium at the reaction temperature.

Recovery of the reaction products is preferably carried out in a manner known per se to those skilled in the art. For example, the free phosphonic acids can be precipitated, e.g. by acidification of the reaction mixture, e.g. with concentrated hydrochloric acid, or by addition of a suitable solvent, e. g. ethanol, filtered of, washed and dried. Further purification can, e. g., be effected by recrystallisation or chromatographic methods.

The phosphonates of the invention are preferably used as reactive intermediates in the chemical and pharmaceutical industry, the textile industry, the oil industry, paper industry, sugar industry, beer industry, the agrochemical industry and in agriculture.

Preferred uses are as intermediates for the production of dispersants, water treatment agents, scale inhibitors, pharmaceuticals, detergents, secondary oil recovery agents, fertilisers and micronutrients (for plants).

The inventive phosphonates are illustrated by means of individual sample preparations, Examples I-VI, recited hereinafter.

I:

260.04 g of 3-Chloropropyl amine hydrochloride (2 moles) are dissolved in 250 ml of water and mixed with 328g of phosphorous acid (4 moles) and 295.72 g of 37% aqueous HCl (3 moles). The mixture is heated under stirring to between 100°C and 110°C. 361.02g of 36.6% aqueous formaldehyde (4.4 moles) are added in 240 minutes while maintaining the temperature between 104°C and 111°C. Heating at 110 °C is continued for an additional period of 60 minutes. Reaction mixture is then poured into a mixture of 1 liter of water and 200 ml ethanol at 50 °C. Under cooling, a white precipitate is formed which is separated by filtration. 414g (73.5%) of a white powder is obtained after drying. $^{31}$P NMR analysis of that white powder showed the presence of 93.5 % of 3-chloro propyl imino bis (methylene phosphonic acid) (CPIBMPA); 2.7% of the corresponding azetidinium salt; 3.7% of hydroxy homologue of CPIBMPA and 0.1% of phosphorous acid.

II:

14.76g (0.025 mole) of a 44.53% aqueous solution of 3-hydroxy propyl imino bis (methylene phosphonic acid) are placed in a high pressure glass tube and mixed with 9.86g (0.10 mole) of 37% aqueous HCl. The tube is capped and the mixture heated under stirring between 120°C and 125°C for 7 hours. $^{31}$P NMR analysis of the crude reaction product showed the presence of 67% of 3-chloro propyl imino bis(methylene phosphonic acid) with the balance being in majority the starting hydroxy product.

III:

14.76g (0.025 mole) of a 44.53% aqueous solution of 3-hydroxy propyl imino bis (methylene phosphonic acid) are placed in a high pressure glass tube and mixed with 17.21g (0.10 mole) of 47% aqueous HBr. The tube is capped and the mixture heated under stirring between 120°C and 125°C for 7 hours. $^{31}$P NMR analysis of the crude reaction product showed the presence of 62% of 3-bromo propyl imino bis(methylene phosphonic acid) with the balance being in majority the starting hydroxy product.

IV:

14.76g (0.025 mole) of a 44.53% aqueous solution of 3-hydroxy propyl imino bis (methylene phosphonic acid) are placed in a high pressure glass tube and mixed with 22.44g (0.10 mole) of 57% aqueous HI. The tube is capped and the mixture heated under stirring between 120°C and 125°C for 7 hours. At room temperature a yellow precipitate is formed and separated from the aqueous phase by filtration. $^{31}$P NMR analysis of the washed and dried precipitate indicated that it is 3-iodo propyl imino bis(methylene phosphonic acid) (IPBMPA). Yield is 70%.

V:

7.32g (0.025 mole) of a 68.8% aqueous solution of 2-(2-imino bis[methylene phosphonic acid] ethoxy) ethanol are placed in a high pressure glass tube and mixed with 9.86g (0.1 mole) of 37% aqueous HCl. The tube is capped and the mixture heated under stirring between 120°C and 125 °C for 7 hours. $^{31}$P NMR analysis of the crude reaction product showed the presence of 69% of 2-(2-imino bis[methylene phosphonic acid] ethoxy) chloro ethane with the balance being in majority the starting hydroxy product.

VI:

7.32g (0.025 mole) of a 68.8% aqueous solution of 2-(2-imino bis[methylene phosphonic acid] ethoxy) ethanol are placed in a high pressure glass tube and mixed with 17.21g (0.1 mole) of 47% aqueous HBr. The tube is capped and the mixture heated under stirring between 120°C and 125 °C for 7 hours. $^{31}$P NMR analysis of the crude reaction product showed the presence of 68% of 2-(2-imino bis[methylene phosphonic acid] ethoxy) bromo ethane with the balance being in majority the starting hydroxy product.

The reactivity of hydroiodic acid in relation to ether or thioether bonds is documented in the art; it routinely follows that the preparation of the iodo species, corresponding to the chloro/bromo species of Examples V-VI, requires the use of a halogen exchange of the reaction product with an inorganic iodide.

The testing data illustrate and clarify significant aspects of the claimed technology. I: shows the formation of the chloropropyl derivative, in a 73.5 % yield, starting from the corresponding chloroamine. II:, III: and IV: respectively describe the preparation of the 3-chloro, 3-bromo and 3-iodo propyl derivatives starting from the corresponding alcohol. The yields are, considering the non-optimized reaction conditions, in the range of from 60 % to 70 % which is high keeping in mind that the non-reacted part (by-product) is predominantly represented by the starting alcohol which can, in turn, be recycled. V: and VI: pertain to the formation of chloro or bromo derivatives starting from the corresponding hydroxyl alkyl ether amine. The products were formed in yields of 68 % to 69 % whereby the unreacted starting material constitutes the majority of the by-products.

## Claims

1. A reactive phosphonate compound having the formula:

   $$Y-X-N\ (W)\ (ZPO_3M_2)$$

   wherein Y is a substituent the conjugated acid of which has a pKa equal to or smaller than 4.0 selected from the group of Cl, I, Br, $HSO_4$, $NO_3$, $CH_3SO_3$ and p-toluene sulfonate and mixtures thereof;
   X is selected from $C_3$-$C_{50}$ linear, branched, cyclic or aromatic hydrocarbon chain, optionally substituted by a $C_1$-$C_{12}$ linear, branched, cyclic, or aromatic group, (which chain and/or which group can be) optionally substituted by OH, COOH, F, OR' and SR' moieties, wherein R' is a $C_1$-$C_{12}$ linear, branched, cyclic or aromatic hydrocarbon chain; provided that when X is substituted by OH such moiety can be attached to any carbon atom other than the second carbon atom starting from Y;
   Z is a $C_1$-$C_6$ alkylene chain;
   M is selected from H and $C_1$-$C_{20}$ linear, branched, cyclic or aromatic hydrocarbon chains;
   W is selected from H, $ZPO_3M_2$ and $[V-N(K)]_nK$, wherein V is selected from: a $C_2$-$C_{50}$ linear, branched, cyclic or aromatic hydrocarbon chain, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear, branched, cyclic or aromatic hydrocarbon chain; and from $[A-O]_x$-A wherein A is a $C_2$-$C_9$ linear, branched, cyclic or aromatic hydrocarbon chain and x is an integer from 1 to 200; and
   K is $ZPO_3M_2$ or H and n is an integer from 0 to 200;
   wherein the following compound is excluded: chloropropyl imino mono (methylene phosphonic acid.

2. The phosphonate compound in accordance with Claim 1 wherein
   X is selected from $C_3$-$C_{50}$ linear or branched hydrocarbon chain, $C_3$-$C_{10}$-cycloalkane-diyl or $C_6$-$C_{12}$-arene-diyl, optionally substituted by a $C_1$-$C_{12}$ linear, branched, cyclic, or aromatic group, (which chain and/or which group can be) optionally substituted by OH, COOH, F, OR' and SR' moieties, wherein R' is a $C_1$-$C_{12}$ linear or branched hydrocarbon chain, a cyclohexane or a phenyl moiety;
   M is selected from H and $C_1$-$C_{20}$ linear or branched hydrocarbon chains, a cyclohexane or a phenyl moiety;
   W is selected from H, $ZPO_3M_2$ and $[V-N(K)]_nK$, wherein V is selected from: a $C_2$-$C_{50}$ linear or branched hydrocarbon chain, $C_3$-$C_{10}$-cycloalkane-diyl or $C_6$-$C_{12}$-arene-diyl, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear or branched hydrocarbon chain, a cyclohexane or a phenyl moiety; and from $[A-O]_x$-A wherein A is a $C_2$-$C_9$ linear or branched hydrocarbon chain, $C_3$-$C_{10}$-cycloalkane-diyl or $C_6$-$C_{12}$-arene-diyl, a cyclohexane or a phenyl moiety, and x is an integer from 1 to 200.

3. The phosphonate compound in accordance with Claim 1 or 2 wherein M is selected from H and $C_1$-$C_{20}$ linear or branched hydrocarbon chains; and
   R' is a $C_1$-$C_{12}$ linear or branched hydrocarbon chain.

4. The phosphonate compound in accordance with any one of Claims 1 to 3 wherein
   X is selected from $C_3$-$C_{50}$ linear or branched hydrocarbon chain, optionally substituted by a $C_1$-$C_{12}$ linear, branched, cyclic, or aromatic group, (which chain and/or which group can be) optionally substituted by OH, COOH, F, OR' and SR' moieties, wherein R' is a $C_1$-$C_{12}$ linear or branched hydrocarbon chain;
   M is selected from H and $C_1$-$C_{20}$ linear or branched hydrocarbon chains; and
   W is selected from H, $ZPO_3M_2$ and $[V-N(K)]_nK$, wherein V is selected from: a $C_2$-$C_{50}$ linear or branched hydrocarbon chain, optionally substituted by $C_1$-$C_{12}$ linear, branched, cyclic or aromatic groups, (which chains and/or groups are) optionally substituted by OH, COOH, F, OR' or SR' moieties wherein R' is a $C_1$-$C_{12}$ linear or branched hydrocarbon chain; and from $[A-O]_x$-A wherein A is a $C_2$-$C_9$ linear or branched hydrocarbon chain, and x is an integer from 1 to 200.

5. The phosphonate compound in accordance with any one of Claims 1 to 4 wherein the pKa is equal to or smaller than 1.0.

6. The phosphonate compound in accordance with any one of Claims 1 to 5 wherein the individual moieties are selected as follows: X is $C_3$-$C_{30}$; V is $C_2$-$C_{30}$ or [A-O]$_x$-A, wherein A is $C_2$-$C_6$ and x is 1-100; Z is $C_1$-$C_3$; M is H or $C_1$-$C_6$; and n is 1-100.

7. The phosphonate compound in accordance with any one of Claims 1 to 6 wherein X is $C_3$-$C_{30}$ and (W) is $ZPO_3M_2$.

8. The phosphonate compound in accordance with any one of Claims 1 to 7 wherein the individual moieties are selected as follows: X is $C_3$-$C_{12}$; V is $C_2$-$C_{12}$ or [A-O]$_x$-A, wherein A is $C_2$-$C_4$ and x is 1-100; Z is $C_1$; M is H, $C_1$-$C_4$ and n is 1-25.

9. The phosphonate compound in accordance with any one of Claims 1 to 8 wherein the optional OH substituent is attached, in the event Y stands for halogen, to any carbon atoms, other than the second, third or fourth, starting from Y, carbon atoms of the group X.

10. A process for the manufacture of the phosphonate compound of any one of Claims 1 to 9 by reacting an amine of the formula halogen-X-$NH_2$, wherein halogen stands for Cl, Br or I and X has the meaning as defined in claims 1 to 9, in aqueous medium having a pH equal to or smaller than 6 with phosphorous acid and formaldehyde at a temperature in the range of from 50 °C to 140 °C.

11. A process for the manufacture of the phosphonate compound in accordance with any one of Claims 1 to 9 by reacting a compound of the formula HO-X-N($ZPO_3M_2$)$_2$, wherein X, Z and M have the meaning as defined in Claims 1 to 9, in aqueous medium having an acid pH equal to or smaller than 6, with a hydrohalogenic acid selected from hydrochloric acid, hydrobromic acid and hydroiodic acid with the proviso that hydroiodic acid is not used in the event X contains ether or thio-ether bonds.

12. The process for the manufacture of the phosphonate compound in accordance with Claim 11, wherein Y is iodide or bromide, by ion-exchange of the chloro compound with an aqueous solution containing an inorganic iodide or bromide salt at a temperature of from 10 °C to 100 °C wherein the ion-exchange medium has a pH of 6 or smaller.

13. The use of phosphonate compounds in accordance with any one of Claims 1 to 9 as intermediates for the production of dispersants, water treatment agents, scale inhibitors, pharmaceuticals, detergents, secondary oil recovery agents, fertilisers and micronutrients.

Europäisches
Patentamt

European
Patent Office

Office européen
des brevets

## EUROPEAN SEARCH REPORT

Application Number

EP 12 16 1861

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MORTIER, JACQUES ET AL: "Synthesis of N-Alkyl/Aryl-.alpha./.beta.-Aminoalkylphosphonic Acids from Organodichloroboranes and .alpha./.beta.-Azidoalkylphosphonates via Polyborophosphonates", ORGANIC LETTERS , 1(7), 981-984 CODEN: ORLEF7; ISSN: 1523-7060, 1999, XP002431622, * compound 33 * | 1-8 | INV. C07F9/38 C02F5/12 C02F5/14 |
| X,D | EP 0 401 833 A2 (NAT STARCH CHEM INVEST [US]) 12 December 1990 (1990-12-12) * page 3, line 31 - page 4, line 45example 1; compound IV * | 1-8 | |
| X,D | US 4 707 306 A (LEIGHTON, JOHN C. ET AL) 17 November 1987 (1987-11-17) * example 1 * | 1-10 | |

| | | | TECHNICAL FIELDS SEARCHED (IPC) |
|---|---|---|---|
| | | | C07F |

The present search report has been drawn up for all claims

| Place of search | Date of completion of the search | Examiner |
|---|---|---|
| Munich | 13 June 2012 | Richter, Herbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 12 16 1861

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2012

| Patent document cited in search report | | Publication date | Patent family member(s) | | Publication date |
|---|---|---|---|---|---|
| EP 0401833 | A2 | 12-12-1990 | CA | 2017786 A1 | 08-12-1990 |
| | | | DE | 69003013 D1 | 07-10-1993 |
| | | | DE | 69003013 T2 | 20-01-1994 |
| | | | EP | 0401833 A2 | 12-12-1990 |
| | | | US | 5023368 A | 11-06-1991 |
| US 4707306 | A | 17-11-1987 | AU | 578187 B2 | 13-10-1988 |
| | | | AU | 8247887 A | 23-06-1988 |
| | | | CA | 1287441 C | 06-08-1991 |
| | | | DE | 3783020 D1 | 21-01-1993 |
| | | | DE | 3783020 T2 | 15-04-1993 |
| | | | EP | 0273107 A2 | 06-07-1988 |
| | | | JP | 1837759 C | 11-04-1994 |
| | | | JP | 5048235 B | 20-07-1993 |
| | | | JP | 63162696 A | 06-07-1988 |
| | | | MX | 168904 B | 14-06-1993 |
| | | | US | 4707306 A | 17-11-1987 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0401833 A
- US 5879445 A
- WO 9408913 A
- US 4330487 A
- US 4260738 A
- US 4297299 A
- US 4707306 A

**Non-patent literature cited in the description**

- **Zaitsev V.N. et al.** Russian Chemical Bulletin. 1999, vol. 48, 2315-2320